# EUROPEAN PATENT SPECIFICATION

(11) **EP 1 770 324 B1**
(45) Date of publication and mention of the grant of the patent: **20.01.2010**
(21) Application number: 06019499.0
(22) Date of filing: 18.09.2006
(51) Int. Cl.: F16L 59/04

(54) **Heat insulating material**
Wärmedämmender Stoff
Matériau isolant thermique

(30) Priority: 30.09.2005 JP 2005288665
(43) Date of publication of application: 04.04.2007
(73) Proprietor: IBIDEN CO., LTD., Ogaki-shi Gifu 503-8604 (JP)
(72) Inventor: Hatanaka, Kiyonari c/o Ibiden Co., Ltd. Gama Plant, Ogaki-shi Gifu 503-8559 (JP)
(74) Representative: HOFFMANN EITLE

(56) References cited:
- EP-A- 1 510 747
- EP-A2- 0 164 984
- JP-A- 11 101 391
- US-A- 3 649 426

## Description

### TECHNICAL FIELD

The present invention relates to a heat insulatingmaterial, and, particularly, to a heat insulatingmaterial used to insulate a fuel cell reformer.

### BACKGROUND ART

As the heat insulating material conventionally used in a fuel cell and the like, products prepared by mixing an inorganic powder such as silicone oxide and titanium oxide in a dry system and then molding the mixed powder by a press are known. These heat insulating materials have high heat insulation properties because they respectively have a porous structure wherein voids existing in the structure are divided by fine particles.

The use of inorganic powders for insulation purposes is known in the art. For example, in US 3,649,426 they are used to prepare materials which can insulate against sound, radiation and the energy of projectile penetration from shells, bullets or shrapnel. The use of inorganic powders to prepare heat insulation materials is also known. For example, in JP 11101391, a mixture of inorganic particles and hard urethane wrapped in covering materials such as non-woven fabrics and plastic laminate films is described. In EP 0164984, thermal insulation tubes are described in which the tube is prepared by laying a flat slab of microporous thermal insulation material on a membrane and then rolling them around a mandrel. The microporous thermal insulation material contains inorganic powders.

However, conventional heat insulating materials are plate shaped heat insulating materials which are made from brittle materials containing 90% or more of a fine powder and also molded through dry pressing. Therefor, these heat insulating materials have significantly inferior moldability and flexibility. These heat insulating materials have the problem that when subject bodies to be insulated having curved surfaces or complex shapes are coated with such a heat insulating material, it is necessary, for example, to make them into an appropriate shape by mechanical processing or to coat these heat insulating materials with materials such as glass-fiber cloth and the like so as to reinforce the heat insulating material. There is also the problem that when plural plate shaped heat insulating materials are used to coat subj ect bodies to be insulated having curved surfaces or complex shapes therewith, voids are easily generated among heat insulating materials and between the heat insulating material and the subj ect body to be insulated, leading to a decrease in heat insulation properties thereof.

In order to solve such a problem, in Patent Document 1, for example, a method is proposed in which a slit is formed on a molded body for a heat insulating material to coat a subject body to be insulated under vacuum when the subject body to be insulated, such as a tube and cylinder, having a curved surface is coated with the heat insulating material. According to the above-mentioned document, it is described that the generation of voids when a heat insulatingmaterial is set to a curved surface can be suppressed.
However, the technologies in which a slit is formed as described in the above-mentioned document have such processing and cost problems that processing works used to form the slit and a structure maintaining the system under vacuum are required and besides, they cannot be applied to all kinds of shapes of the subject materials.

In the meantime, a heat insulating material with ceramic fibers knitted cloth-wise (or fabric-wise) is known as a heat insulating materialhaving processability and moldability (see, for example, Patent Document 2). However, though such heat insulating material has superb processability, it has many voids communicated each other at a finely structural level and therefore only insufficient insulation is obtained.
Patent Document 1: JP-A 11-280989
Patent Document 2: JP-A 9-249445

### DISCLOSURE OF THE INVENTION

### PROBLEMS TO BE SOLVED BY THE INVENTION

Current heat insulating materials are in the situation where if it is intended to improve these materials in heat insulation property, they are deteriorated in moldability and processability whereas if it is intended to improve these materials in moldability and processability, they are deteriorated in heat insulation property. It is therefore desired to develop a heat insulating material having both contradictory natures, namely, heat insulation property and moldability/processability.

It is an object of the present invention to provide a heat insulating material having both contradictory natures, namely, heat insulation property and moldability/processability. Another object of the present invention is to provide a heat insulating material having excellent heat insulation property that can be easily processed and molded into an intended shape.

### MEANS FOR SOLVING THE PROBLEMS

In light of the above-mentioned problem, the inventors of the present invention have made earnest studies and as a result, found that studies focused on an improvement in strength by compounding inorganic fibers and an improvement in heat insulation property by compounding an inorganic powder bring about the result that if a filler comprising at least an inorganic powder is filled in closed hollow parts inside a molded body in the hollow molded body made of at least inorganic fiber, a heat insulating material having both insulating ability and processability that are contradictory natures can be obtained, to complete the present invention.

Accordingly, a heat insulating material according to claim 1 solves the above-mentioned problem. The hollow molded body further contains an inorganic powder and also, the fillerpreferably further contains an inorganic fiber.

The filler preferably has a bulk density of 0.15 to 0.4 g/cm³.
The hollow molded body is preferably a molded body obtained by wet molding.

### EFFECTS OF THE INVENTION

The heat insulating material of the present invention comprises a hollow molded body made of at least an inorganic fiber and a filler which is filled in the hollow part of the hollow molded body and is made of at least an inorganic powder. Therefore, the heat insulating material of the present invention can exhibit complex characteristics including the mechanical strength and processability/moldability of the hollow molded body and the heat insulation property of the filler and can therefore attain the compatibility between heat insulation property and processability/moldability which could not be attained by the conventional heat insulating materials.

Particularly, because the heat insulating material of the present invention has the above-mentioned configuration, it can be molded into a shape consistent with a subject body to be insulated even if it is any of an integrated molded body and a divided molded body and can be simply assembled with the subj ect body to be insulated.
Specifically, when the heat insulating material of the present invention is constituted of an integrated molded body, the gaps existing in general when plural heat insulating materials are combined with one another are not present among the heat insulating materials. Also, even in the case where the heat insulating material of the present invention is constituted of divided molded bodies, the number of molded bodies which are divided is extremely small and therefore, the generation of voids among the heat insulating materials can be likewise suppressed to the utmost. Also, since the generation of voids between the heat insulating material and the subject material to be insulated can be prevented, the heat insulating material of the present invention is free from the leakage of heat out of the heat insulating material, making it possible to exhibit excellent insulating ability.

Also, as mentioned above, the heat insulating material of the present invention can be easily processed and molded into a shape corresponding to its use while retaining heat insulation property, so that the range of its applications can be expanded.
Particularly, the heat insulating material of the present invention may be effectively applied to a fuel cell reformer having an outer form of a cylinder, whereby safety in use and cost performance can be improved.

### BEST MODE FOR CARRYING OUT THE INVENTION

A heat insulating material according to the present invention comprises the features of claim 1.

Examples of the inorganic fiber include silica-alumina fiber, alumina fiber, silica fiber, zirconia fiber, glass fiber and potassium titanate whisker fiber. The use of these inorganic fibers is desirable in view of heat resistance, strength and availability. The above-mentioned inorganic fibers may be used independently or two or more kinds thereof may be used in combination.
Among the above-mentioned inorganic fibers, particularly silica-alumina fiber is preferably used from the viewpoint of heat resistance and handling characteristics.

The cross-sectional shape of the inorganic fiber is not particularly limited and examples thereof include a circular cross-section, flat cross-section, hollow cross-section, polygonal cross-section and sheath-core cross-section. Because modified cross-section fiber having a hollow cross-section, flat cross-section or polygonal cross-section among these sections is increased in opportunities to reflect radiation heat transfer in heat transfer and also slightly improved in heat insulation property, it can be preferably used.

The lower limit value of the average fiber length of the inorganic fiber is preferably 0.1 mm and more preferably 0.5 mm. On the other hand, the upper limit value of the average fiber length of the inorganic fiber is preferably 50 mm and more preferably 10 mm.
When the average fiber length of the inorganic fiber is less than 0.1 mm, entanglements among inorganic fibers are scarcely caused and there is therefore the case where the mechanical strength of the obtained hollow molded body decreases. On the other hand, when the average fiber length is longer than 50 mm, though a reinforcing effect is obtained, inorganic fibers are not tightly entangled with each other and only single inorganic fibers are intertwined into a ball, whereby continuous voids are easily generated, leading to a fear that a reduction in heat insulation property is brought about.

The lower limit value of the average fiber diameter of the inorganic fiber is preferably 1 µm and more preferably 2 µm. On the other hand, the upper limit value of the average fiber diameter of the inorganic fiber is preferably 10 µm and more preferably 5 µm.
This is because when the average fiber diameter of the inorganic fiber is less than 1 µm, the mechanical strength of the inorganic fiber itself decreases, whereas when the average fiber diameter is more than 10 µm, solid heat conduction through the inorganic fiber as a medium is increased, and there is therefore the case where the heat insulation property of the heat insulating material is deteriorated.

The hollow molded body further contains an inorganic powder.
The hollow molded body constituting the heat insulating material of the present invention should contain at least an inorganic fiber. The use of such a hollow molded body allows the heat insulating material of the present invention to produce its effect as a heat insulatingmaterial; however, it is desirable that the hollow molded body further contains an inorganic powder.
If the hollow molded body further contains the inorganic powder, radiation heat transfer is suppressed efficiently. Also, the continuous voids in the structure, which voids are caused by entanglement of the inorganic fibers, can be divided and it is therefore possible to also reduce convection heat transfer in the hollow molded body in an efficient manner.

Examples of the inorganic powder include a TiO₂ powder, BaTi₃ powder, PbS powder, SiO₂ powder, ZrO₂ powder, SiC powder, NaF powder and LiF powder. These inorganic powders may be used independently or two or more kinds thereof may be used in combination.
When the inorganic powders are used in combination, preferable examples of the combinations include a combination of a TiO₂ powder and SiO₂ powder, a combination of a TiO₂ powder and BaTi₃ powder, a combination of a SiO₂ powder and BaTi₃ powder, and a combination of a TiO₂ powder, SiO₂ powder and BaTi₃ powder.

As to the amount of the compounding amount of the inorganic fiber, the upper limit value thereof is preferably 50% by weight and more preferably 40% by weight based on the total weight of the materials constituting the hollow molded body. On the other hand, the lower limit value of the compounding amount of the inorganic fiber is 5% by weight and more preferably 10% by weight.
When the compounding amount of the inorganic fiber is less than 5% by weight, the reinforcing effect produced by the inorganic fiber is not obtained and therefore, the handling characteristics and mechanical strength of the hollow molded body or heat insulating material are deteriorated. When the compounding amount of the inorganic fiber to be compounded exceeds 50% by weight on the other hand, many continuous voids are resultantly present in the structure in which the inorganic fibers constituting the hollow molded body are entangled, leading to an increase in convection heat transfer, molecular heat transfer and radiation heat transfer, with the result that heat insulation property is deteriorated.

As to the compounding amount of the inorganic powder, the upper limit thereof is preferably 95% by weight and more preferably 90% by weight based on the total weight of the materials constituting the hollow molded body. On the other hand, the lower limit of the compounding amount is preferably 50% by weight and more preferably 60% by weight.
When the compounding amount of the inorganic powder falls in the above-mentioned range, radiation heat transfer can be reduced while retaining the reinforcing effect of the inorganic fiber. Also, the effect of decreasing convection heat transfer which is obtained by dividing continuous voids in a confounded structure of the inorganic fiber can be obtained.

The lower limit value of the average particle diameter of the inorganic powder is preferably 0.5 µm and more preferably 1 µm. On the other hand, the upper limit value of the average particle diameter of the inorganic powder is preferably 20 µm and more preferably 10 µm.
When the average particle diameter of the inorganic powder is less than 0.5 µm, not only is it difficult to manufacture a heat insulating material but also the thermal conductivity of a heat insulating material is increased (in other words, the heat insulation material is decreased) because radiation heat is insufficiently distributed. When an inorganic powder having an average particle diameter of more than 20 µm is used on the other hand, voids produced in the heat insulating material become extremely large, leading to an increase in convection heat transfer and molecular heat transfer, resulting in increased thermal conductivity also in this case.
The shape of the inorganic powder is not particularly limited as long as the average particle diameter is within the above-mentioned range. Examples of the shape include desired shapes such as a spherical shape, elliptical shape, polygonal shape, shapes having irregularities or projections formed on the surface thereof and deformed shapes.

Also, the inorganic powder preferably has a ratio of refractive index (specific refractive index) of 1.25 or more for light having a wavelength of 1 µm or more.
The inorganic powder plays a very important role as a radiation heat diffusing material. As the refractive index increases, radiation heat can be diffused more efficiently. As to the specific refractive index, it is very important to limit the conduction of phonons. The larger this value is, the better the effect of limiting phonon conduction is. Therefore, the value of the specific refractive index of the inorganic powder is 1.25 or more.

Here, to add a little more explanation concerning the limitation to phonon conduction, materials having lattice defects in a crystal or materials having a complicated structure are generally known as the material that can limit phonon conduction. The aforementioned TiO₂, SiO₂ and BaTiO₃ tend to have lattice defects and have a complicated structure and it is therefore considered that they are effective to diffuse not only radiation heat but also phonons.

Moreover, an inorganic powder having a reflectance of 70% or more for light having a wavelength of 10 µm or more may be preferably used as the inorganic powder. The light having a wavelength of 10 µm or more is light in the so-called infrared to far-infrared wavelength range. Radiation heat transfer can be reduced more efficiently if the reflectance for light in the above wavelength range is 70% or more.

The solid heat conductivity of the inorganic powder is preferably 20.9 W/mK or less at room temperature.
If an inorganic powder having a solid heat conductivity of 20.9 W/mK or more at ambient temperature is used as the raw material, solid heat conduction becomes predominant in the heat insulating material and therefore the thermal conductivity is increased (there is a reduction in heat insulation property).

Here, the inorganic fiber in this specification refers to an inorganic fiber having an aspect ratio of 3 or more. On the other hand, the inorganic powder refers to an inorganic powder having an aspect ratio less than 3. In this case, the aspect ratio is the ratio (b/a) of the major diameter (b) tominordiameter (a) of a material.

Also, the hollowmoldedbodymay contain an inorganic binder with the intention of maintaining strength at high temperatures. Examples of the inorganic binder include colloidal silica, synthetic mica and montmorillonite. The above-mentioned inorganic binders may be used independently or two or more kinds thereof may be used in combination.
This inorganic binder may be used, according to the need, in an amount range from 1 to 10% by weight based on the total weight of the constituent materials of the hollow molded body. As a mode of use of the above-mentioned inorganic binder, the binder may be used by blending it in raw materials or by impregnating the obtained heat insulating material therewith.

In the present invention, besides the hollow molded body, an organic elastic material may be used according to the need as the constituent materials of the hollow molded body. This organic elastic material is useful to manufacture a heat insulating material which is to be used in the parts requiring flexibility. As the elastic material, an emulsion of natural rubber, acrylonitrile butadiene rubber (NBR) or synthetic rubber latex binder such as styrene butadiene rubber (SBR) may be preferably used. Particularly, in the case of manufacturing the heat insulating material of the present invention in a wet method, the flexibility can be improved by using the organic elastic materials.

The compounding amount of the organic elastic material is preferably in the range of 0 to 5% by weight based on the total weight of the constituent materials of the hollow molded body.
The organic elastic material may be contained or not contained as the constituent materials. However, if the compounding amount of the organic elastic material exceeds 5% by weight in the case where it is contained as the constituent material, the organic elastic material is burned down when it is used at a high temperature range of 700°C or more, and thereby voids are significantly increased, resulting in deteriorated heat insulation property.

The hollow molded body constituting the heat insulating material of the present invention is a molded body obtained by molding inorganic fiber and the like into a desired shape by a dry molding method or a wet molding method and has a hollow part that canbe filled with a filler. A method for manufacturing the hollow molded body will be described later.
The hollow molded body may have any shape without any particular limitation as long as it has a hollow part. Examples of the shape of the hollow molded body include a cube shape, a rectangular parallelepiped shape, a plate shape, disk, a cylindrical shape, a double-tube type shape, a triple-tube type shape, a doughnut type shape or a spherical shape. The heat insulating material of the present invention which is constituted of a hollow molded body like this is free from the necessity for dividing it when it is assembled and therefore, can be assembled integrally and entirely in a subject material to be insulated which has a curved surface.

The wall thickness of the hollow molded body is preferably in the range of 3 to 20 mm though no particular limitation is imposed thereon. The wall thickness of the hollow molded body refers to a maximum thickness among the wall thicknesses of parts extended from the outside surface to the hollow part of the hollow molded body in the case of a double-tube type hollow molded body.
When the wall thickness of the hollow molded body is less than 3 mm, it is impossible to impart sufficient mechanical strength to the heat insulating material, whereas when the wall thickness exceeds 20 mm, not only does the molding of the hollow molded body itself tends to become difficult but also the amount of the filler to be filled in the hollow part is decreased and there is therefore a fear as to a reduction in the insulating action of the filler.

The inorganic powder is contained in addition to the inorganic fiber as the constituent material of the hollow molded body, thus the inorganic powder and the filler (described later) filled in the hollow part do not easily escape out of the hollow molded body. According to the need, a part or all of the hollow molded body may be made to have a more densified structure for the purpose of preventing the escape of the inorganic powder and the filler.
The inorganic powder is contained as the constituent material of the hollow molded body. Since the inorganic powder constituting the hollow molded body is included in a structure in which the inorganic fibers are entangled the inorganic powder is not escaped externally frombetween the inorganic fibers with ease in the heat insulating material of the present invention. However, because it is considered to be possible that a load of very strong impact is applied to the heat insulating material depending on the working environment, and the inorganic powder is escaped in the air, the inorganic fiber structure of the part including the inorganic powder is densified to prevent the inorganic powder from escaping.

As a method of densifying the hollow molded body, there are a method in which the hollow molded body is heated so as to melt only the surface of the inorganic fiber confounded structure and a method in which the surface of the hollow molded body is coated with a heat resistant film or the like. However, the method of densifying the hollow molded body is not limited to these exemplified methods and any method may be used insofar as an escape of the inorganic powder is prevented.

The bulk density of the hollow molded body is, though not particularly limited, in the range of 0.35 to 0.45 g/cm³. The bulk density may be found as a value obtained by dividing the weight by the apparent volume (see JIS A0202).
When the bulk density is less than 0.35 g/cm³, convection heat transfer and molecular heat transfer are increased, whereas when the bulk density exceeds 0.45 g/cm³, solid heat conduction is increased and the thermal conductivity is therefore increased. Therefore, in any of these cases, the heat insulation property is deteriorated resultantly.

### (Hollow part of the hollow molded body)

The hollow part of the hollow molded body is a closed space which is capable of receiving a filler and is formed inside of the hollow molded body.
The hollow part is formed as one partition (specifically, only one closed space inside of the hollow molded body) inside of the hollow molded body. However, the hollow part is not limited to one partition but may be formed as a multi-partition consisting of two or more partitions.
A heat insulating material having a multi-partition structure and/or a multilayer structure may be constituted as a whole by forming the hollow part as a multi-partition.

### (Filler)

The filler to be filled in the hollow part of the hollow molded body comprises at least an inorganic powder.
As the inorganic powder, the inorganic powder described in the explanations of the hollow molded body may be preferably used. The inorganic powder may be used independently or two or more kinds thereof may be used in combination. When inorganic powders are used in combinations, the combinations of inorganic powders as described in the explanations of the hollow molded body may be used as desirable combinations. Convection heat transfer, molecular heat transfer and radiation heat transfer can be suppressed efficiently by filling the aforementioned filler made of at least the inorganic powder in the hollow part.

The filler may further contain inorganic fiber.
If the filler further contains inorganic fiber, the light having a wavelength which cannot be reflected or diffused only by the inorganic powder can be reflected and distributed, making it possible to aid the heat insulating material of the present invention in improving the heat insulation property thereof.
As the inorganic fiber contained in the filler, the inorganic fiber as described in the explanations of the hollow moldedbodymaybe used. Like the inorganic powder, the inorganic fibers may be used independently or two or more kinds thereof may be used in combination.

The bulk density of the filler to be filled in the heat insulating material of the present invention is in the range of 0.15 to 0.4 g/cm³.
When the bulk density of the filler is less than 0.15 g/cm³, the filler is refilled by external actions such as oscillation, bringing about an increase invoidparts and there is a possibility of the heat insulation property being deteriorated. On the other hand, when the bulk density exceeds 0.4 g/cm³, the influence of solid heat conduction is increased and there is a possibility of the heat insulation property being deteriorated. Also, because the heat capacity of the whole heat insulating material is increased and the amount of heat accumulation is therefore increased, more energy is required to heat the whole system.
When the filler is a mixture of the above-mentioned materials, it is needless to say that the bulk density means the bulk density of the whole mixture.

In the case where the hollow part is formed so as to have a multi-partition structure and/or a multilayer structure, the bulk densities of the fillers in each partition and each layer may be the same or different. The filler may be filled in the hollow part in a desired bulk density as long as the bulk density is in the above-mentioned range.

Next, the method for manufacturing the heat insulating material of the present invention will be explained. (Method for manufacturing the heat insulating material)
The heat insulating material of the present invention is manufactured by producing a hollow molded body by die-forming a hollow molded body made of at least the inorganic fiber and filling at least inorganic powder in the hollow part of the hollow molded body to form a filler. The hollow molded body may be manufactured by any method including a dry molding method or a wet molding method. The method for manufacturing the heat insulating material of the present invention in the case of obtaining the hollow molded body by each molding method will be explained hereinafter.

### (a) The case of using a hollow molded body obtained by a dry molding method.

First, in a dry molding method, the inorganic fiber and, according to the need, the inorganic powder, the inorganic binder and the organic elastic material are charged at a predetermined ratio into a mixer such as a V-type mixer. These components are mixed well and charged into a predetermined die to be pressed, thereby obtaining a hollow molded body having an opening at a part thereof. At the time of pressing, heat may be applied to the mixture according to the need.
The hollow molded body may be integrated so as to have a hollow part or may be formed by partially molding according to the need and then combining a plurality of the obtained divided molded products to manufacture a hollow molded body.

The pressure for the pressing is desirably in the range of 0.98 to 9.8 MPa. When the pressing pressure is less than 0.98 MPa, the obtained hollow molded body cannot maintain its strength and is hence destroyed, whereas when the pressing pressure exceeds 9. 8 MPa, excess compression causes deteriorated processability and also, the bulk density becomes so high that solid heat conduction is increased, bringing about deteriorated heat insulation property.
Also, the heating temperature during pressing is desirably in the range of 200 to 400°C in the case where the organic elastic material is contained and in the range of 400 to 700°C when the organic elastic material is not contained. When the heating temperature is in this range, sufficient heat insulation property can be maintained while retaining a proper processability.

Then, the filler is filled in the hollow part through the opening such that a predetermined bulk density is obtained, and then, the opening is closed by the molded product produced separately in advance so as to have a shape that can just cover the opening, to obtain a heat insulating material according to the present invention. Examples of the method for filling the filler include methods utilizing mechanical compression, oscillation, deaeration and methods obtained by combining these methods.
The molded product may be secured by using an inorganic adhesive and the like so as to cover the opening. Also, it is possible to impregnate the obtained molded body or molded product with an inorganic binder before filling the filler in the hollow part.

### (b) The case of using a hollow molded body obtained by a wet molding method.

Next, in a wet molding method, the inorganic fiber and, according to the need, the inorganic powder and the inorganic binder are mixed and stirred in water to fully disperse these components. Then, an aqueous aluminum sulfate solution and the like is added as a coagulator to the mixture, to obtain a primary coagulate made of the inorganic fiber with the inorganic powder and inorganic binder adhered along its surface. Next, according to need, an emulsion or the like of the organic elastic material is added in the water in an amount falling in a predetermined range and then, a cationic polymer coagulant is added to the mixture to obtain a slurry containing a coagulate.
Here, when the organic elastic material is further used as the structural materials of the hollow molded body, it becomes difficult to adhere the inorganic binder along the fiber and it is significantly difficult to retain strength at high temperatures if the order of the additions of the aqueous aluminum sulfate solution and organic elastic material is reversed; therefore the order of the addition must especially be paid attention to.

Next, the slurry containing a coagulate is charged into a predetermined die, which is then evacuated to obtain a wet hollow molded body having an opening at a part thereof. The obtained hollow molded body is dried to obtain a hollow molded body at a part thereof.
Here, the water content of the hollow molded body before it is dried is preferably 200% or less. When the water content exceeds 200%, there is the case where the hollow molded body shrinks when it is dried so that the dimension to be intended is obtained with difficulty.

If it is intended to produce a solid molded body by a method using such wet molding, the inorganic powder is densely molded in the early stage and it is difficult to evacuate the slurry successively. However, in the case of producing a hollow molded body having such a wall thickness as mentioned above, the problem which arises in the production of the solid molded body does not occur and also from this point, the structure of the present invention produces an advantageous effect on an improvement in moldability.

Then, in the same manner as in the dry molding method, the filler is filled in the hollow part of the hollow molded body obtained in the above-mentioned process through the opening such that a predetermined bulk density is obtained, and then, the opening is closed by the molded product produced from the mixture by a wet molding separately in advance so as to have a shape that can just cover the opening, to obtain aheat insulating material according to the present invention. Examples of a method of filling the filler and a method of closing the opening include those described in the explanations of the dry molding method (a).

The hollow molded body may be molded by a die (or metal mold) of a desired shape to an integrated body or separated parts. Because the hollow molded body is constituted of at least the inorganic fiber and therefore has excellent moldability and processability, it can be easily and efficiently manufactured also by the integrated molding which is conventionally applied with difficulty.

As mentioned above, the hollow molded body may be obtained by any of the dry molding method and wet molding method. It is however preferable that the molded body is one obtained by the wet molding from the viewpoint of easiness of integrated molding and mechanical strength.

In the heat insulating material of the present invention which is obtained in the above-mentioned manner, the strength is reinforced by inorganic fiber and also, the strength when the heat insulating material is used at high temperatures is retained in the case of using an inorganic binder. Also, the inclusion of the inorganic fiber improves the moldability and processability, enabling integrated molding of the hollow molded body in accordance to the shape of a subject material to be insulated. This ensures that in the heat insulating material of the present invention, which is different from the conventional heat insulating material prepared by assembling many heat insulating materials, no void exist among heat insulating materials and also the number of divided parts is very small and each divided parts are formed precisely even if the heat insulating material is formed by assembling separated parts, which makes it possible to outstandingly limit the generation of voids among the heat insulating materials and the heat insulating material of the present invention can exhibit excellent heat insulation property.

Also, the use of the inorganic powder limits the convection of the air present in a void inside of the heat insulating material and molecular heat transfer and further, allows radiation heat to be diffused whereby excellent insulating properties can be obtained. As mentioned above, in a heat insulating material having the structure of the present invention, the compatibility between heat insulation property, moldability/processability can be attained.
It is to be noted that the hollow molded body produced by the wet molding method using the organic elastic material can be improved in flexibility in an efficient manner.

The heat insulating material of the present invention may be used in various uses. It is useful, for example, as a heat insulating material for insulating a fuel cell reformer.
A fuel cell is an energy supply source using hydrogen and oxygen as fuels and attracts remarkable attention as a clean power generating system. The hydrogen as the fuel is obtained by converting city gas or alcohols into hydrogen by a catalytic reaction in the reformer. At this time, the temperature of the catalyst which is required for the catalytic reaction by combustion is as high as about 600 to 900°C and it is therefore necessary to insulate the outside of the reformer.

Here, many fuel cell reformers have a cylindrical form and therefore, in conventional cases, plural heat insulating materials are combined to assemble them and slits are formed in the heat insulating materials to make these heat insulating materials accord to the shape of the reformer. However, in this case, voids are generated among the heat insulating materials and between the reformer and the heat insulating materials and therefore only insufficient heat insulation property is obtained.

The heat insulating material of the present invention enables integrated molding into a shape fitted to the shape of the reformer though the conventional heat insulating materials have not been produced by such integrated molding. Therefore, the whole subject material to be insulated can be fully covered with the integrated heat insulating material and also the generation of voids can be prevented by the adhesion between the reformer and the heat insulating material, whereby excellent insulating effects can be obtained.

### BRIEF DESCRIPTION OF THE DRAWINGS

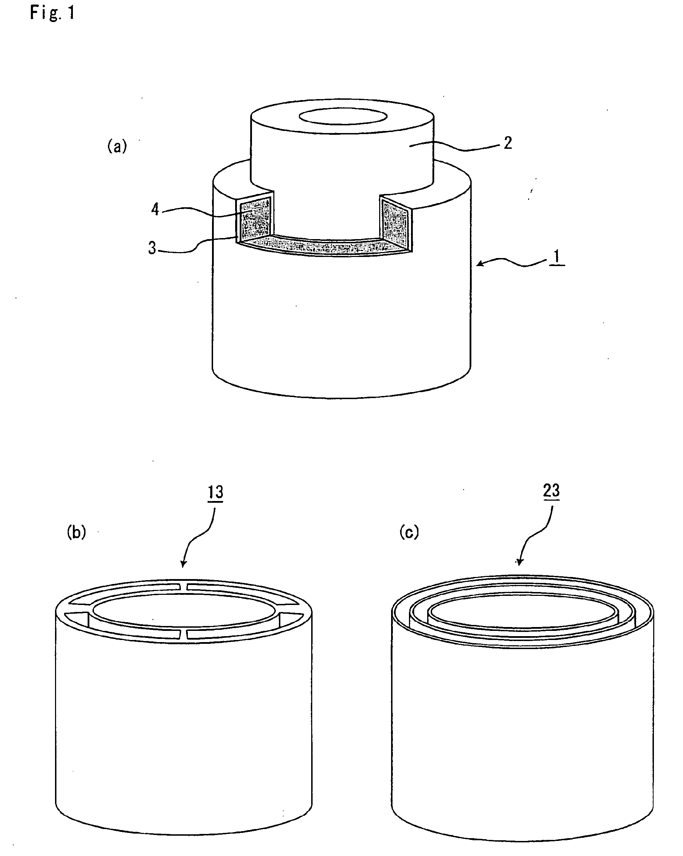

Fig. 1(a) is a perspective view schematically showing an example of a heat insulating material of the present invention which is set to a fuel cell reformer; Fig. 1(b) is a perspective view schematically showing one example of a hollow molded body constituting a heat insulating material of the present invention; and Fig. 1(c) is a perspective view schematically showing another example of a hollow molded body constituting a heat insulating material of the present invention.

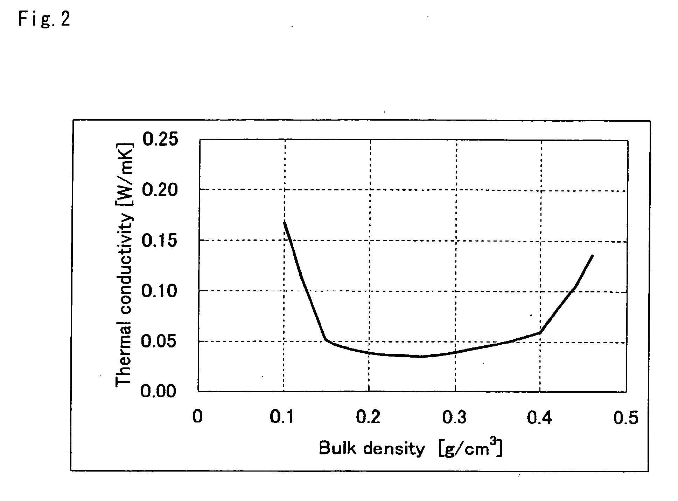

Fig. 2 is a graph obtained by plotting thedifferencebetween a change in the bulk density (g/cm³) of the filler and a change in the thermal conductivity (W/mK) of the integrated molded type heat insulating material of the present invention when the heat insulating material is heated to 600°C, shown in Table 1.

Fig. 1(a) is a perspective view schematically showing an example of the heat insulating material of the present invention which is set to the reformer. Fig. 1(b) is a perspective view schematically showing one example of the hollow molded body constituting the heat insulating material of the present invention. Fig. 1(c) is a perspective view schematically showing another example of the hollow molded body constituting the heat insulating material of the present invention.
A double tube-shaped heat insulating material 1 of the present invention is set to the outside periphery of a reformer 2 having a cylindrical form without any void. Also, the heat insulating material 1 comprises a hollow molded body 3 and a filler 4 filled in a hollow part inside of the hollow molded body 3. The length in the longitudinal direction and inside diameter of the heat insulating material 1 may be adjusted corresponding to the size of the reformer to be used.

Also, in Fig. 1 (a), the hollow part filled with the filler 4 is formed as one partition and therefore, the hollow molded body constituting the heat insulating material 1 is provided with a hollow part having monolayer structure. However, the form of the hollow molded body constituting the heat insulating material of the present invention is not limited to that of the hollow molded body. The hollow molded body may have a structure in which the circumference of a double-tube shape is divided into four partitions as the hollow part like the hollow molded body 13 shown in Fig. 1(b) or a structure in which a hollow part having a double-layer structure spread in the direction of the diameter concentrically from the center of the tube like the hollow molded body 23 as shown in Fig. 1(c). Figs. 1(b) and 1(c) show only the hollow molded body. No particular limitation is imposed on the number of partitions and the number of layers and the hollow molded part may be formed irrespective of the number of partitions or layers. Also, the hollow part may be formed such that it has a multi-partition and multilayer structure obtained by combining the structures shown in Fig. 1(b) and 1(c) with each other.

The heat insulating material of the present invention ensures that it can be miniaturized and has complicated shapes by integrated molding.
Therefore, the heat insulating material of the present invention may be effectively applied not only to a fuel cell reformer used in a stationary power generating system but also to a fuel cell reformer used in a power generating system of limited space, such as fuel cell cars.

### EXAMPLES

The present invention will be explained in more detail by way of examples, which are not intended to be limiting of the present invention.

### (Examples 1 to 12)

A so-called shot-reduced bulk material (trade name: IBI-Wool, manufactured by Ibiden Co. , Ltd.) prepared by removing coarse particles from silica-alumina based ceramic fiber as inorganic fiber constituting a hollow molded body was added in a necessary amount of water to loosen the fibers.

Then, 24% by weight of a TiO₂ powder (trade name: Rutile Flower, manufactured by Kinsei Matec Co., Ltd.) and 49% by weight of a SiO₂ powder (trade name: CARPREX, manufactured by Shionogi & Co., Ltd.) were added as an inorganic powder of the hollow molded body to the mixture, which was then sufficiently mixed. Then, 3% by weight of colloidal silica (trade name: SNOWTEX, manufactured by Nissan Chemical Industries Ltd.) was further added as an inorganic binder to the mixture, which was then thoroughly stirred and mixed. The compounding amount of the shot-reduced bulk material was 24% by weight. An aqueous aluminum sulfate was further added as a coagulant to the mixture to obtain a primary coagulant. Then, a cationic polymer coagulant was added to the primary coagulant to once again coagulate the primary coagulant so that a slurry was prepared.

The slurry was molded in a metal mold to obtain a double-tube shaped hollow molded body with an open end at the upper surface, and having an inside diameter of 90 mm, an outside diameter of 200 mm, a thickness of 5 mm and a height of 300 mm. This hollow molded body was dried under the condition of 110°C for 8 hours.

Next, 34% by weight of the TiO₂ powder and 66% by weight of the SiO₂ powder were thoroughly stirred and mixed by a mixer to obtain a powder mixture as a filler. The obtained powder mixture was filled in the hollow part of the double-tube shaped hollow molded body in the bulk densities shown in Table 1 by oscillation and compression. Then, the opened upper surface of the hollow molded body was closed with a disk-shaped molded product made in advance into the same form as the opening by using the same materials that were used for the hollow molded body, to obtain an integrated heat insulating material as shown in Fig. 1(a). The disk-shaped molded product was secured by applying and curing an inorganic adhesive.

A heater was disposed inside of the heat insulating material obtained in the Examples and heated to 600°C to measure a thermal conductivity (W/mK) of the heat insulating material. The results of the measurement are shown in Table 1.

**[Table 1]**

| | Bulk density (g/cm³) | Thermal conductivity (W/mK) |
|---|---|---|
| Example 1 | 0.10 | 0.1672 |
| Example 2 | 0.14 | 0.0731 |
| Example 3 | 0.15 | 0.0522 |
| Example 4 | 0.18 | 0.0418 |
| Example 5 | 0.22 | 0.0366 |
| Example 6 | 0.26 | 0.0350 |
| Example 7 | 0.30 | 0.0392 |
| Example 8 | 0.34 | 0.0460 |
| Example 9 | 0.38 | 0.0543 |
| Example 10 | 0.40 | 0.0596 |
| Example 11 | 0.42 | 0.0836 |
| Example 12 | 0.46 | 0.1358 |

| | | |
|---|---|---|
| (Note) Each value of the thermal conductivity is a value measured at 600°C. | | |

As shown in Table 1, each of the heat insulating materials obtained in Examples showed excellent heat insulation property in general though it is an integrated molded type heat insulating material, and accomplishes the compatibility between heat insulation property and moldability/processability, though such compatibility has not been attained by the conventional product. Moreover, Examples 3 to 10, as is clear from Fig. 2, each had a thermal conductivity of 0.06 W/mK or less and it is therefore found that particularly excellent heat insulation property was exhibited when the bulk density of the filler was in the range of 0.15 to 0.4 g/cm³.
Fig. 2 is a graph obtained by plotting a relationship between a change in the bulk density (g/cm³) of the filler and a change in the thermal conductivity (W/mK) of the integrated molded type heat insulating material of the present invention when the heat insulating material was heated to 600°C, shown in Table 1.
Also, when the heater was disposed inside of the integrated molded type heat insulating material obtained in Example 6 and heated to 800°C, the temperature of the outside peripheral wall of the heat insulating material was about 50°C, and therefore, the heat insulatingmaterial exhibitedexcellent heat insulation property.

### (Comparative Example 1)

A commercially available plate-shaped microporous type heat insulating material (trade name: MICROTHERM, manufactured by Nippon Microtherm Co.Ltd.) (50 mm in thickness) was processed into a disk-shaped material having an inside diameter of 90 mm and an outside diameter of 200 mm by mechanic processing. Six of these heat insulating materials were piled up one after another so as to have a height of 300 mm to make a multi-divided type heat insulating material having the same shape as the Examples.

When a heater was disposed in the inside of the heat insulating material obtained in Comparative Example 1 and heated to a temperature of 800°C, the temperature in the vicinity of the contact part between the heat insulating materials was about 80°C and sufficient heat insulation property could not be obtained.

### (Comparative Example 2)

In the same manner as in the Examples, 83% by weight of ceramic fiber, 14% by weight of a TiO₂ powder and 3% by weight of colloidal silica were mixed and stirred in water and an aqueous aluminum sulfate solution was added as a coagulant to the mixture to obtain a primary coagulate and then a cationic polymer coagulant was added to the mixture to once again coagulate the primary coagulate so that a slurry was prepared. The slurry was molded using a metal mold, to obtain a solid molded body having the same outer shape (inside diameter: 90 mm, outside diameter: 200 mm and height: 300 mm) as those produced in the Examples. Therefore, the molded body of Comparative Example 2 has no hollow part to be filled with the filler 4 as in Fig. 1(a).

When a heater was disposed in the inside of the solid molded body and heated to a temperature of 800°C, the temperature of the outside wall was about 90°C though the solid molded body had an integrated molded body type shape and therefore, sufficient heat insulation property could not be obtained.

### EXPLANATION OF SYMBOLS

- 1: Heat insulating material
- 2: Reformer
- 3,: 13, 23 Hollow molded body
- 4: Filler

## Claims

1. A heat insulating material (1) comprising:
(i) a hollow molded body (3) made from at least an inorganic fiber and further containing an inorganic powder as a constituent material, wherein the hollow part of the hollow molded body (3) is a closed space formed inside of the hollow molded body (3); and
(ii) a filler (4) made of at least an inorganic powder which is filled in the hollow part of the hollow molded body (3).

2. The heat insulating material (1) according to Claim 1, wherein said filler (4) further contains an inorganic fiber.

3. The heat insulating material (1) according to Claim 1 or 2, wherein said filler (4) has a bulk density of 0.15 to 0.4 g/cm³.

4. The heat insulating material (1) according to any of Claims 1 to 3, wherein said hollow molded body (3) is a molded body obtained by wet molding.

## Patentansprüche

1. Wärmeisolationsmaterial (1), umfassend:
(i) einen hohlen Formkörper (3), der zumindest aus anorganische(r/n) Faser(n) hergestellt wurde und ferner ein anorganisches Pulver als Bestandteil enthält, wobei der hohle Teil des hohlen Formkörpers (3) ein innerhalb des hohlen Formkörpers (3) gebildeter, geschlossener Raum ist; und
(ii) einen Füllstoff (4), der zumindest aus einem anorganischen Pulver hergestellt wurde und in den hohlen Teil des hohlen Formkörpers (3) eingefüllt ist.

2. Wärmeisolationsmaterial (1) gemäss Anspruch 1, worin der Füllstoff (4) ferner eine anorganische Faser enthält.

3. Wärmeisolationsmaterial (1) gemäss Anspruch 1 oder 2, worin der Füllstoff (4) eine Schüttdichte von 0,15 bis 0,4 g/cm³ aufweist.

4. Wärmeisolationsmaterial (1) gemäss einem der Ansprüche 1 bis 3, wobei der hohle Formkörper (3) ein Formkörper ist, der durch Nassformen erhalten wird.

## Revendications

1. Matériau d'isolation thermique (1) comprenant:
(i) un corps moulé creux (3) réalisé à partir d'au moins une fibre inorganique et contenant en plus une poudre inorganique comme matière constitutive, où la partie creuse du corps moulé creux (3) est un espace fermé formé à l'intérieur du corps moulé creux (3); et
(ii) une garniture (4) réalisée à partir d'au moins une poudre inorganique qui est chargée dans la partie creuse du corps moulé creux (3).

2. Matériau d'isolation thermique (1) selon la revendication 1, dans lequel ladite garniture (4) contient en plus une fibre inorganique.

3. Matériau d'isolation thermique (1) selon la revendication 1 ou 2, dans lequel ladite garniture (4) a une densité apparente de 0,15 à 0,4 g/cm³.

4. Matériau d'isolation thermique (1) selon l'une des revendications 1 à 3, dans lequel ledit corps moulé creux (3) est un corps moulé obtenu par moulage par voie humide.
